(19) Europäisches Patentamt
European Patent Office
Office européen des brevets

(11) **EP 2 279 497 B1**

(12) **EUROPEAN PATENT SPECIFICATION**

(45) Date of publication and mention
of the grant of the patent:
**10.02.2016 Bulletin 2016/06**

(51) Int Cl.:
***G06T 15/20*** (2011.01)  ***G06T 15/40*** (2011.01)
***G06T 15/50*** (2006.01)

(21) Application number: **09731588.1**

(22) Date of filing: **14.04.2009**

(86) International application number:
**PCT/US2009/002309**

(87) International publication number:
**WO 2009/128899 (22.10.2009 Gazette 2009/43)**

(54) **SWOOP NAVIGATION**

SWOOP-NAVIGATION

NAVIGATION TRIDIMENSIONNELLE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **14.04.2008 US 44744 P**

(43) Date of publication of application:
**02.02.2011 Bulletin 2011/05**

(73) Proprietor: **Google Inc.**
**Mountain View, CA 94043 (US)**

(72) Inventors:
• **VARADHAN, Gokul**
**Mountain View, CA 94043 (US)**
• **BARCAY, Daniel**
**Mountain View, CA 94043 (US)**

(74) Representative: **Anderson, Oliver Ben**
**Venner Shipley LLP**
**200 Aldersgate**
**London EC1A 4HD (GB)**

(56) References cited:
**EP-A- 0 471 484   US-B1- 6 500 069**

• **MACKINLAY J D ET AL: "RAPID CONTROLLED
MOVEMENT THROUGH A VIRTUAL 3D
WORKSPACE" COMPUTER GRAPHICS, ACM,
US, vol. 24, no. 4, 6 August 1990 (1990-08-06),
pages 171-176, XP000603087**
• **BUCHHOLZ H ET AL: "Smart and Physically-
Based Navigation in 3D Geovirtual
Environments" INFORMATION VISUALISATION,
2005. PROCEEDINGS. NINTH INTERNATIONAL
CONF ERENCE ON LONDON, ENGLAND 06-08
JULY 2005, PISCATAWAY, NJ, USA,IEEE, 6 July
2005 (2005-07-06), pages 629-635, XP010836394
ISBN: 978-0-7695-2397-2**
• **BURTNYK N ET AL: "STYLE-CAM: INTERACTIVE
STYLIZED 3D NAVIGATION USING INTEGRATED
SPATIAL & TEMPORAL CONTROLS" UIST 02.
PROCEEDINGS OF THE 15TH. ANNUAL ACM
SYMPOSIUM ON USER INTERFACE SOFTWARE
AND TECHNOLOGY. PARIS, FRANCE, OCT. 27 -
30, 2002; [ACM SYMPOSIUM ON USER
INTERFACE SOFTWARE AND TECHNOLOGY],
NEW YORK, NY : ACM, US, vol. CONF. 15, 27
October 2002 (2002-10-27), pages 101-110,
XP001171572 ISBN: 978-1-58113-488-9**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

Field of the Invention

This invention relates to navigating in a three dimensional environment.

Related Art

Systems exist for navigating through a three dimensional environment to display three dimensional data. The three dimensional environment includes a virtual camera that defines what three dimensional data to display. The virtual camera has a perspective according to its position and orientation. By changing the perspective of the virtual camera, a user can navigate through the three dimensional environment.

EP0471484 (Xerox Corporation) describes techniques for operating a system to produce the perception of a moving viewpoint within a three-dimensional work-space. When the user indicates a point of interest on an object, the viewpoint can approach the point of interest asymptotically, with both radial and lateral motion. The orientation of the viewpoint can rotate to keep the point of interest in the field of view. The field of view can also be centered about the point of interest by rotating the viewpoint.

Mackinlay, J.D. et al, "Rapid Controlled Movement Through a Virtual 3D Workspace," Computer Graphics, Volume 24, Number 4, August 1990, describes a technique in which a user selects a 3D point of interest (the target) on the surface of an object. On each animation cycle, the user's viewpoint is moved the same relative percentage of the distance to the target, resulting in an approach that is rapid for large distances, but logarithmically slower as the target becomes closer.

A geographic information system is one type of system that uses a virtual camera to navigate through a three dimensional environment. A geographic information system is a system for storing, retrieving, manipulating, and displaying a substantially spherical three dimensional model of the Earth. The three dimensional model may include satellite images texture mapped to terrain, such as mountains, valleys, and canyons. Further, the three dimensional model may include buildings and other three dimensional features.

The virtual camera in the geographic information system may view the spherical three dimensional model of the Earth from different perspectives. An aerial perspective of the model of the Earth may show satellite images, but the terrain and buildings be hard to see. On the other hand, a ground-level perspective of the model may show the terrain and buildings in detail. In current systems, navigating from an aerial perspective to a ground-level perspective may be difficult and disorienting to a user.

Methods and systems are needed for navigating from an aerial perspective to a ground-level perspective that are less disorienting to a user.

BRIEF SUMMARY

According to the a first aspect of the present invention, there is provided a method as set out in claim 1. According to a second aspect of the present invention, there is provided a system as set out in claim 4. According to a third aspect of the present invention, there is provided a computer readable medium as set out in claim 9.

By tilting the virtual camera and reducing the distance between the virtual camera and a target, the virtual camera swoops in towards the target. In this way, embodiments of this invention navigate a virtual camera from an aerial perspective to a ground-level perspective in a manner that is less disorienting to a user.

Further embodiments, features, and advantages of the invention, as well as the structure and operation of the various embodiments of the invention are described in detail below with reference to accompanying drawings.

BRIEF DESCRIPTION OF THE DRAWINGS/FIGURES

The accompanying drawings, which are incorporated herein and form a part of the specification, illustrate the present invention and, together with the description, further serve to explain the principles of the invention and to enable a person skilled in the pertinent art to make and use the invention.

FIGS. 1A-D are diagrams illustrating several swoop trajectories in arrangements useful for understanding the present invention.
FIG. 2 is a screenshot of an example user interface of a geographic information system.
FIGS. 3A-B are flowcharts illustrating a method for swoop navigation according to an embodiment of the present invention.
FIGS. 4-5 are diagrams illustrating a method for determining a target, which may be used in the method of FIGS. 3A-B.

FIG. 6 is a diagram illustrating swoop navigation with an initial tilt in an example of the method of FIGS. 3A-B.

FIGS. 7A-C are flowcharts illustrating methods for determining a reduced distance and a camera tilt, which may be used in the method of FIGS. 3A-B.

FIG. 8A is a chart illustrating functions for determining a tilt according to a distance.

FIG. 8B is a diagram showing an example swoop trajectory using a function in FIG. 8A.

FIG. 9 is a diagram illustrating a method for reducing roll, which may be used in the method of FIGS. 3A-B.

FIG. 10 is a diagram illustrating a method for restoring a target's screen space projection, which may be used in the method of FIGS. 3A-B.

FIGS. 11A-B show methods for adjusting a swoop trajectory for streaming terrain, which may be used in the method of FIGS. 3A-B.

FIG. 12 is an architecture diagram showing an geographic information system for swoop navigation according to an embodiment of the present invention.

The drawing in which an element first appears is typically indicated by the leftmost digit or digits in the corresponding reference number. In the drawings, like reference numbers may indicate identical or functionally similar elements.

DETAILED DESCRIPTION OF EMBODIMENTS

Embodiments of this invention relate to navigating a virtual camera in a three dimensional environment along a swoop trajectory. In the detailed description of the invention that follows, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

According to an embodiment of the invention, swoop navigation moves the camera to achieve a desired position and orientation with respect to a target. Swoop parameters encode position and orientation of the camera with respect to the target. The swoop parameters may include: (1) a distance to the target, (2) a tilt with respect to the vertical at the target, (3) an azimuth and, optionally, (4) a roll. In an example, an azimuth may be the cardinal direction of the camera. Each of the parameters and their operation in practice is described below.

Swoop navigation may be analogous to a camera-on-a-stick. In this analogy, a virtual camera is connected to a target point by a stick. A vector points upward from the target point. The upward vector may, for example, be normal to a surface of a three dimensional model. The vector may extend from a center of the three dimensional model through the target. In the analogy, as the camera tilts, the stick angles away from the vector. In an embodiment, the stick can also rotate around the vector by changing the azimuth of the camera relative to the target point.

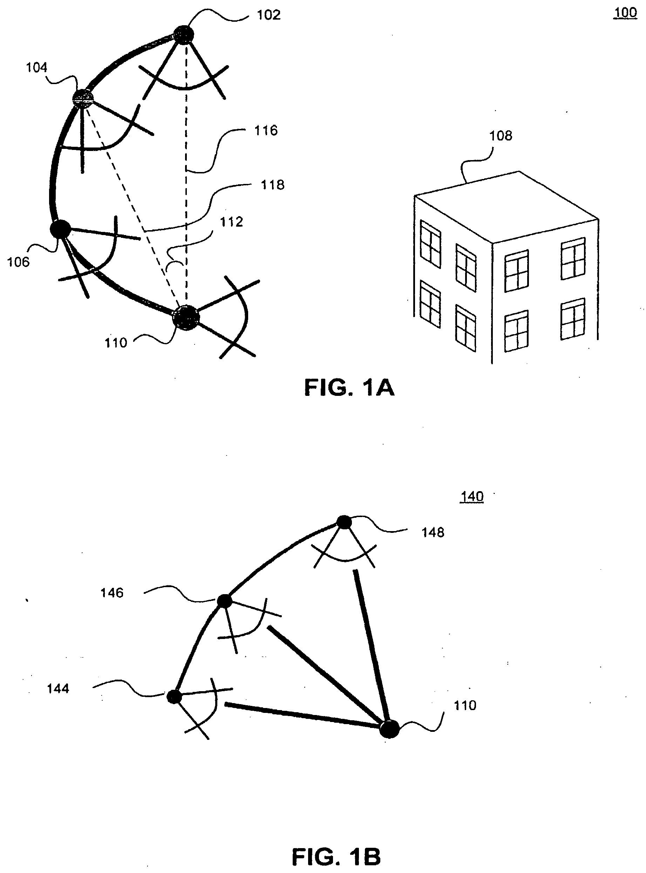

FIG. 1A shows a diagram 100 illustrating a simple swoop trajectory useful for understanding the present invention. Diagram 100 shows a virtual camera at a location 102. At location 102, the virtual camera has an aerial perspective. In the example shown, the user wishes to navigate from the aerial perspective to a ground-level perspective of a building 108. At location 102, the virtual camera is oriented straight down, therefore its tilt is zero, and the virtual camera is a distance 116 from a target 110.

To determine the next position on the swoop trajectory, distance 116 is reduced to determine a new distance 118. In the example shown, the distance between the virtual camera and the target is reduced. A tilt 112 is also determined. Tilt 112 is an angle between a vector directed upwards from target 110 and a line segment connecting location 104 and target 110. Tilt 112 may be determined according to reduced distance 118. The camera's next position on the swoop trajectory corresponds to tilt 112 and reduced distance 118. The camera is repositioned to a location 104. Location 104 is distance 118 away from target 112. Finally, the camera is rotated by tilt 112 to face target 110.

The process is repeated until the virtual camera reaches target 110. When the virtual camera reaches target 110, the tilt is 90 degrees, and the virtual camera faces building 108. In this way, it is possible to easily navigates from an aerial perspective at location 102 to a ground perspective of building 108. More detail on the operation of swoop navigation, its alternatives and other embodiments are described below.

The swoop trajectory in diagram 100 may also be described in terms of the swoop parameters and the stick analogy mentioned above. During the swoop trajectory in diagram 100, the tilt value increases to 90 degrees, the distance value decreases to zero, and the azimuth value remains constant. In the context of the stick analogy, a vector points upward from target 110. During the swoop trajectory in diagram 100, the length of the stick decreases and the stick angles away from the vector. The swoop parameters may be updated in other ways to form other trajectories.

FIG. 1B shows a diagram 140 illustrating another trajectory useful for understanding the present invention. The trajectory in diagram 140 shows the virtual camera helicoptering around target 110. Diagram 140 shows a virtual camera starting at a position 148. Traveling along the trajectory, the virtual camera stays equidistant from the target. In terms of swoop parameters, distance stays constant, but the tilt and azimuth values may change as the camera moves along the trajectory. In terms of the stick analogy, the length of the stick stays constant, but the stick pivots around the target. In this way, the camera moves along the surface of a sphere with an origin at the target.

The trajectory shown in diagram 140 may be used, for example, to view a target point from different perspectives. However, the trajectory in diagram 140 does not necessarily transition a user from an aerial to a ground-level perspective.

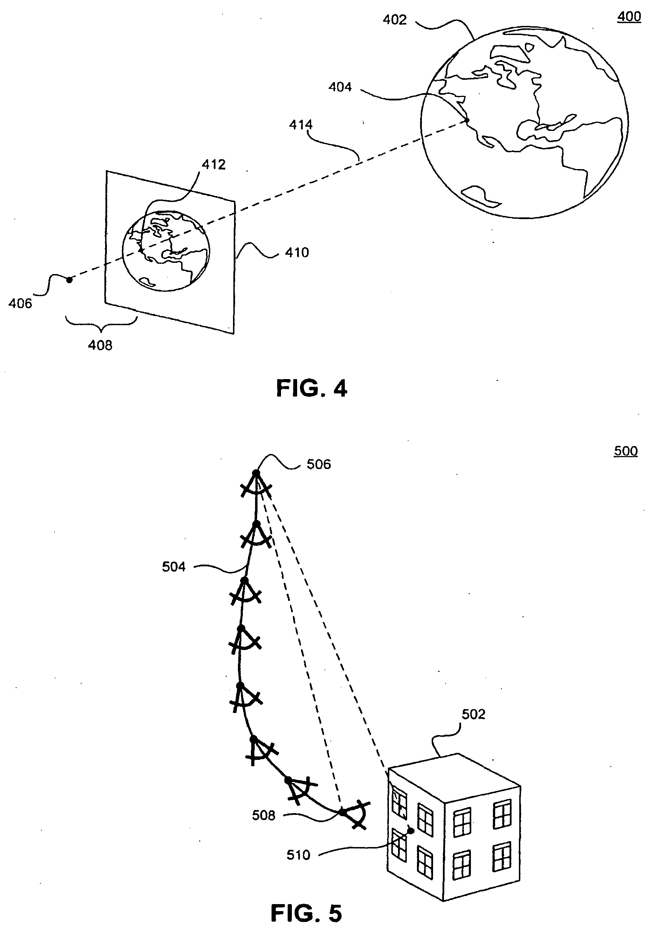

Also, FIG. 1B shows that target 110 need not project out of the center of the virtual camera. This will be described in more detail with respect to FIGS. 4 and 5.

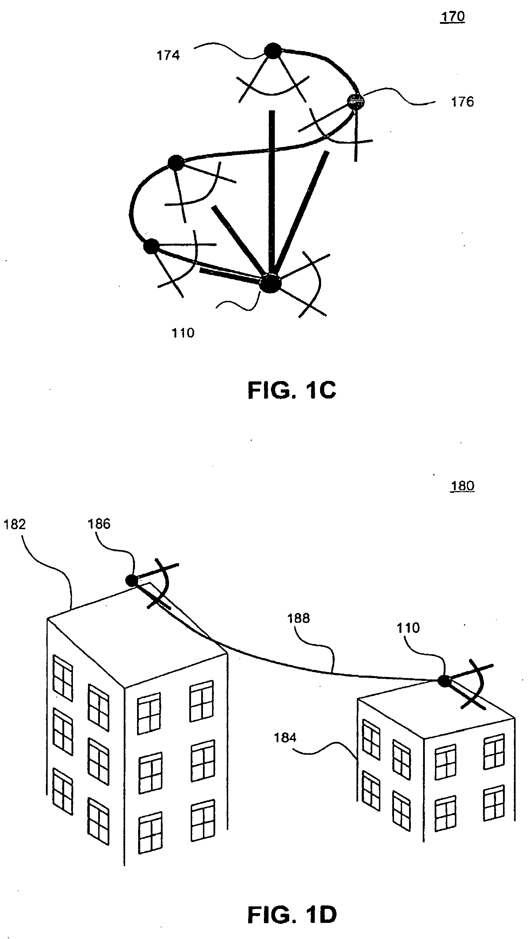

FIG. 1C shows a diagram 170 illustrating a swoop trajectory that both shows a target from different perspectives and transitions from an aerial to a ground-level perspective. A virtual camera starts the swoop trajectory in diagram 170 at a location 174. As the virtual camera moves from location 174 to a location 176, the virtual camera approaches the target and tilts relative to the target as with the swoop trajectory in diagram 100. But, the virtual camera also helicopters around the target as with the trajectory in diagram 140. The swoop trajectory shown in diagram 170 continues until the virtual camera reaches target 110. In terms of the swoop parameters, the tilt value increases to 90 degrees, the distance value decreases to zero, and the azimuth value changes. In terms of the stick analogy, the length of the stick decreases, and the stick both tilts away and rotates around a vector directed upwards from target 110.

FIG. 1D shows a diagram 180 illustrating how a swoop trajectory may be used to navigate through a three dimensional space. The three dimensional space includes two buildings 182 and 184. On top of building 182 a virtual camera sits at a location 186. Target 110 is on top of building 184. Target 110 may be selected in response to a user input as is described below with respect to FIGS. 4 and 5. The virtual camera moves from location 186 at building 182 along a swoop trajectory 188 to target 110 at building 184. In other words, the virtual camera swoops from building 182 to building 184. In this way, a swoop trajectory may be used to navigate through a three dimensional space.

In another example, the target location may be in motion. In that example, swoop navigation may be used to follow the moving target. An example of calculating a swoop trajectory with a moving target is described in detail below.

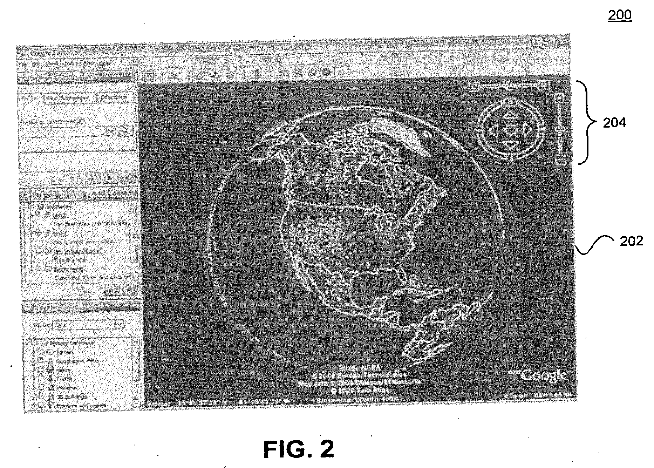

Swoop navigation may be used by a geographic information system to navigate in a three dimensional environment including a three dimensional model of the Earth. FIG. 2 is a screenshot of a user interface 200 of a geographic information system. User interface 200 includes a display area 202 for displaying geographic information/data.

As mentioned above, the data displayed in display area 202 is from the perspective of a virtual camera. In an embodiment, the perspective is defined by a frustum such as, for example, a three dimensional pyramid with the top spliced off. Geographic data within the frustum can be displayed at varying levels of detail depending on its distance from the virtual camera.

Example geographic data displayed in display area 202 include images of the Earth. These images can be rendered onto a geometry representing the Earth's terrain creating a three dimensional model of the Earth. Other data that may be displayed include three dimensional models of buildings.

User interface 200 includes controls 204 for changing the virtual camera's orientation. Controls 204 enable a user to change, for example, the virtual camera's altitude, latitude, longitude, pitch, yaw and roll. In an embodiment, controls 204 are manipulated using a computer pointing device such as a mouse. As the virtual camera's orientation changes, the virtual camera's frustum and the geographic information/data displayed also change. In addition to controls 204, a user can also control the virtual camera's orientation using other computer input devices such as, for example, a computer keyboard or a joystick.

In the example shown, the virtual camera has an aerial perspective of the Earth. In an embodiment, the user may select a target by selecting a position on display area 200. Then, the camera may swoop down to a ground perspective of the target using the swoop trajectory described with respect to FIG. 1.

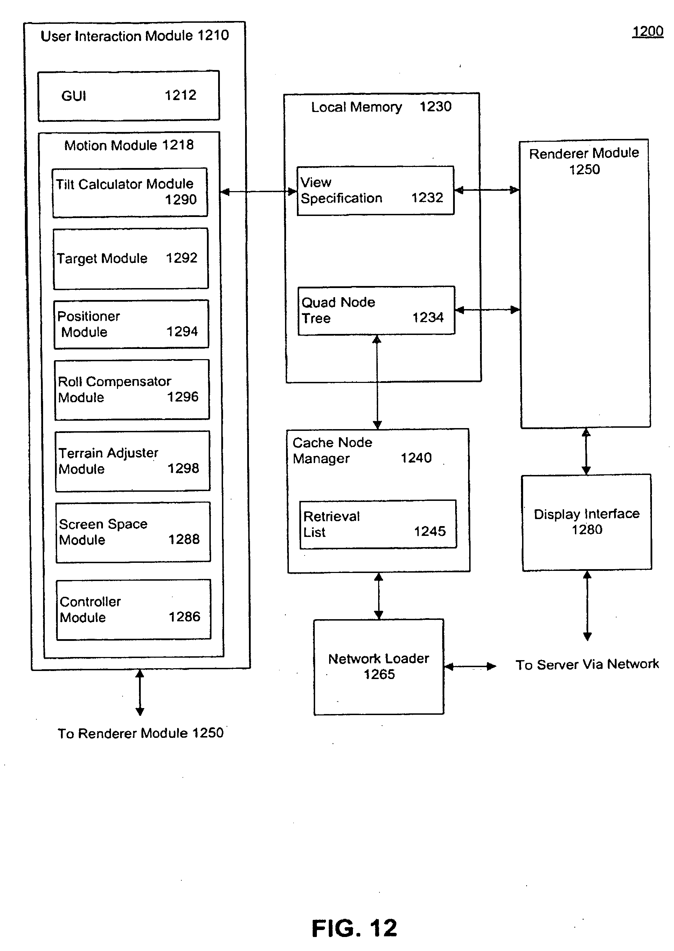

The geographic information system can be operated using a client-server computer architecture. In such a configuration, user interface 200 resides on a client machine. The client machine can be a general-purpose computer with a processor, local memory, display, and one or more computer input devices such as a keyboard, a mouse and/or a joystick. Alternatively, the client machine can be a specialized computing device such as, for example, a mobile handset. The client machine communicates with one or more servers over one or more networks, such as the Internet. Similar to the client machine, the server can be implemented using any general-purpose computer capable of serving data to the client. The architecture of the geographic information system client is described in more detail with respect to FIG. 12.

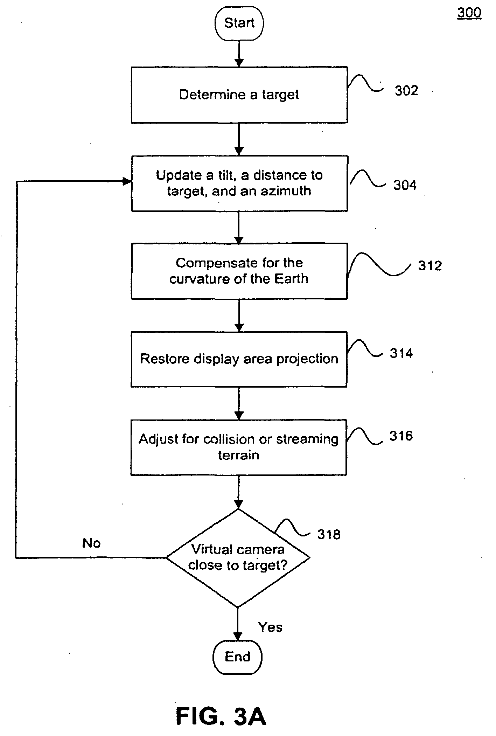

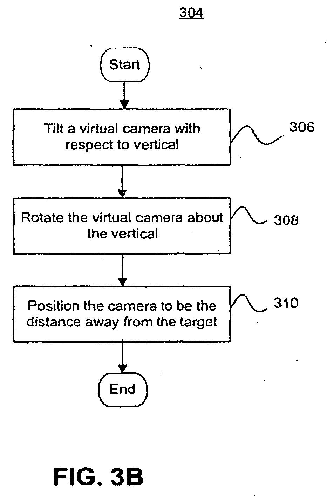

FIG. 3 is a flowchart illustrating a method 300 for swoop navigation according to an embodiment of the present invention. Method 300 begins by determining a target at a step 302. The target may be determined according to a user selection on display area 202 in FIG. 2. How the target is determined is discussed in more detail with respect to FIGS. 4 and 5.

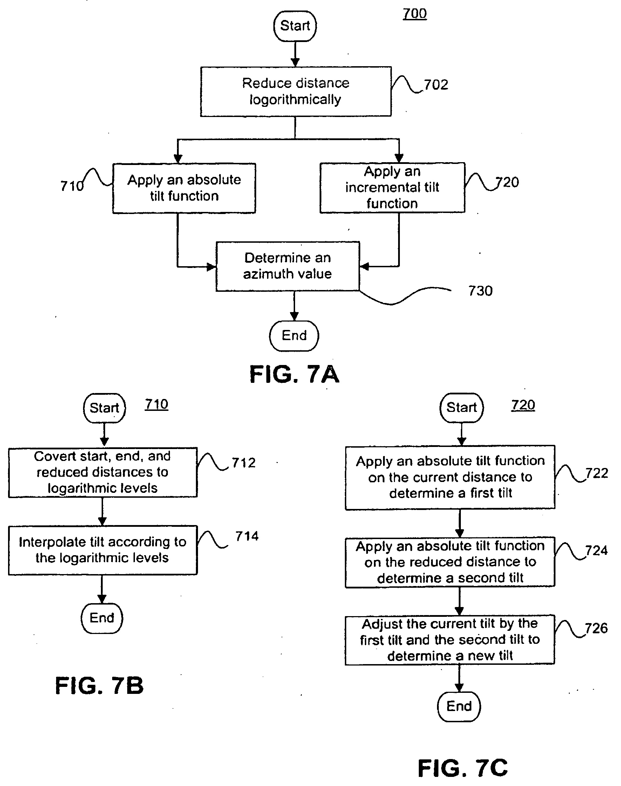

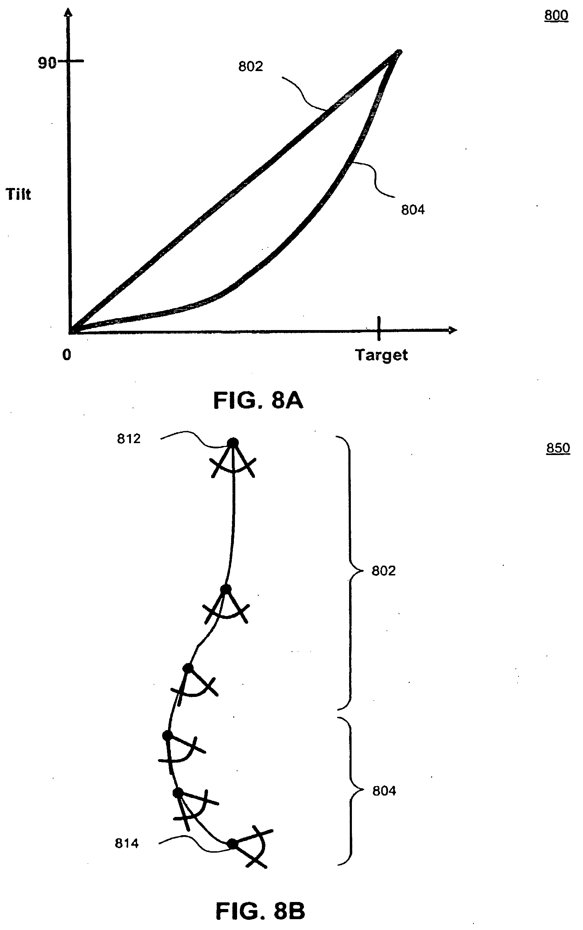

At step 304, new swoop parameters may be determined and a virtual camera is repositioned. The new swoop parameters may include a tilt, an azimuth, and a distance between the virtual camera and the target. In embodiments, the distance between the virtual camera and the target may be reduced logarithmically. The tilt angle may be determined according to the reduced distance. In one embodiment, the virtual camera may be repositioned by translating to the target, angling the virtual camera is by the tilt, and translating away from the target by the new distance. Step 304 is described in more detail with respect to FIG. 3B. Further, one possible way to calculate swoop parameters is discussed in detail with respect to FIGS. 7A-C and FIGS. 8A-B.

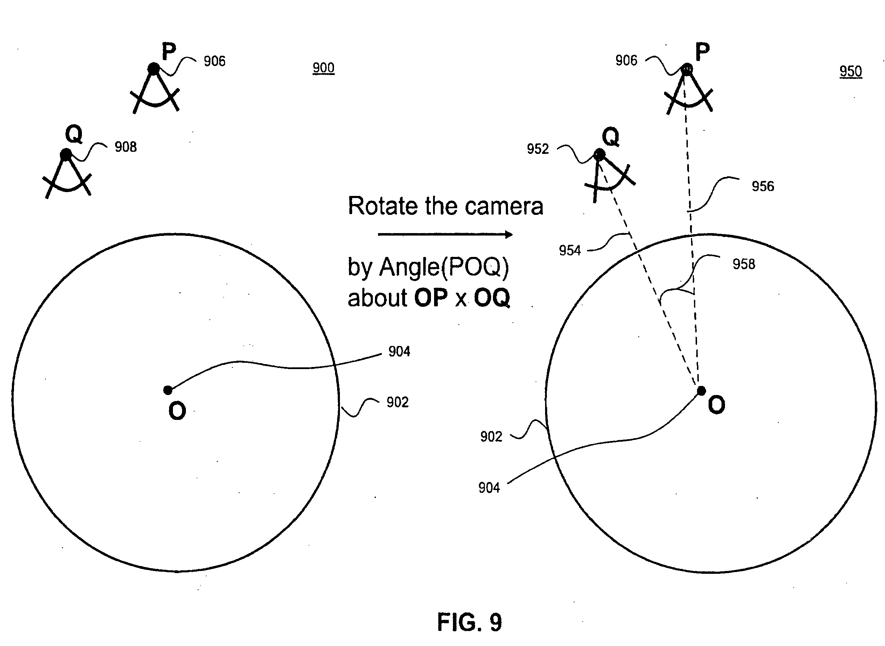

When the camera is repositioned, the curvature of the Earth may introduce roll. Roll may be disorienting to a user. To reduce roll, the virtual camera is rotated to compensate for the curvature of the Earth at step 306. Rotating the camera to reduce roll is discussed in more detail with respect to FIG. 9.

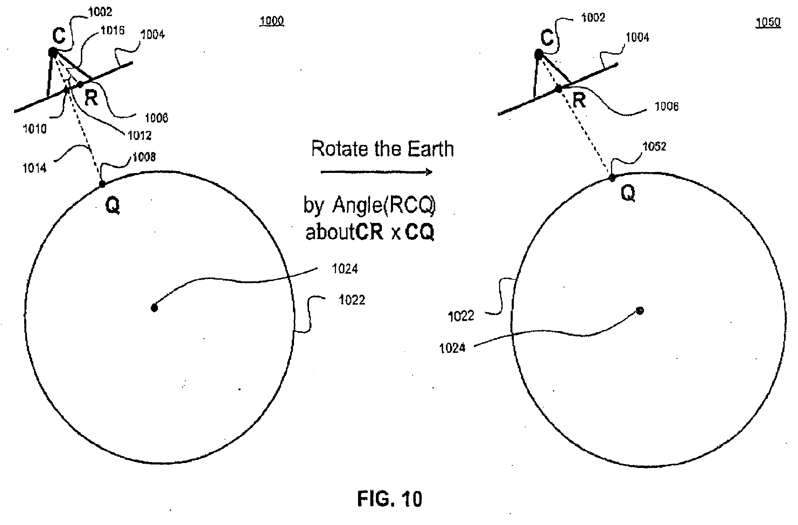

In repositioning and rotating,the camera, the target may appear in a different location on a display area 202 in FIG. 2. Changing the position of the target on display area 202 may be disorienting to a user. At step 308, the target's projection onto the display area is restored by rotating the model of the Earth. Restoring display area projection is discussed in more detail with respect to FIG. 10.

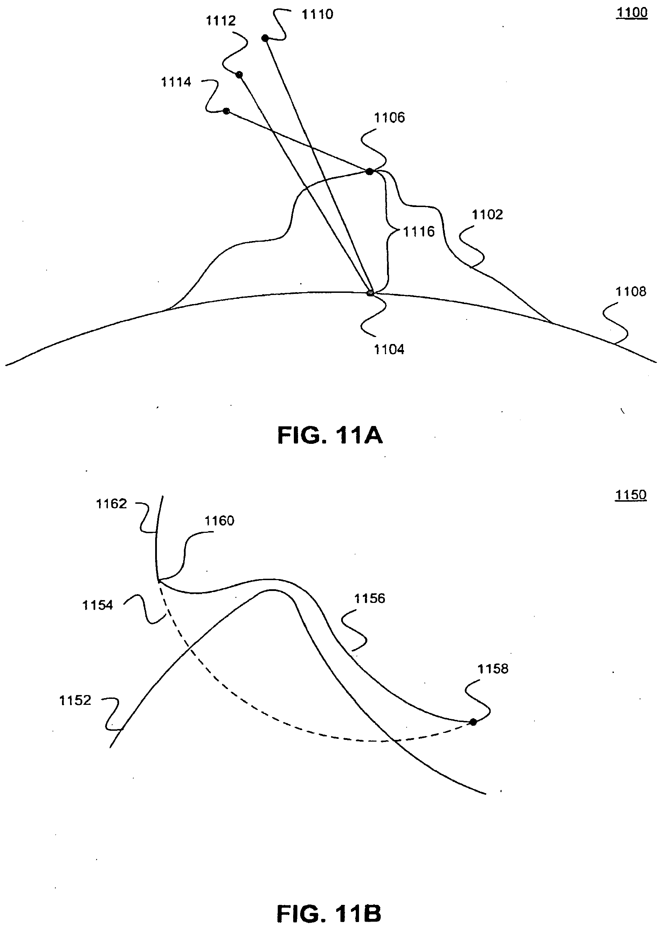

When the camera is repositioned and the model is rotated, more detailed information about the Earth may be streamed to the GIS client. For example, the GIS client may receive more detailed information about terrain or buildings. In another example, the swoop trajectory may collide with the terrain or buildings. As result, adjustments to either the position of the virtual camera or the target may be made at step 310. Adjustments due to streaming terrain data are discussed in more detail with respect to FIGS. 11A-B.

Finally, steps 304 through 310 are repeated until the virtual camera is close to the target at decision block 312.

The process is repeated until the distance between the virtual camera and the target is below a threshold. In this way, the virtual camera captures a close-up view of the target without being too close as to distort the target.

In one embodiment, method 300 may also navigate a virtual camera towards a moving target. If the distance is reduced in step 302 according to the speed of the target, method 300 may be cause the virtual camera to follow the target at a specified distance.

FIG. 3B shows step 304 of method 300 in FIG. 3A in more detail. As mentioned above, step 304 includes updating swoop parameters and repositioning the virtual camera according to the swoop parameters. The swoop parameters may include a tilt, an azimuth and a distance between the virtual camera and the target. At step 314, the virtual camera is tilted. In other words, an angle between the line segment connecting the target and the virtual camera and a vector directed upwards from the target is increased. At step 316, an azimuth of a virtual camera is changed. According to the azimuth, the camera is rotated around the vector directed upwards from the target. Finally, the camera is positioned such that it is at a new distance away from the target. One way to calculate new tilt, azimuth and distance values is discussed with respect to FIGS. 7A-C and FIGS. 8A-B.

FIGS. 4-6, 7A-C, 8A-B, 9-10, and 11A-B elaborate on the method 300 in FIGS. 3A-B. They provide various alternative embodiments of the method 300. However, they are not meant to limit method 300.

FIGS. 4 and 5 show diagrams illustrating a method for determining a target, which may be used in step 302 of FIG. 3. FIG. 4 shows a diagram 400. Diagram 400 shows a model of the Earth 402. Diagram 400 also shows a focal point 406 of a virtual camera. The virtual camera is used to capture and to display information as described with respect to FIG. 2. The virtual camera has a focal length 408 and a viewport 410. Viewport 410 corresponds to display area 202 in FIG. 2. A user selects a position on display area 202, and the position corresponds to a point 412 on viewport 410.

The target is determined by extending a ray from the virtual camera to determine an intersection with the model. In diagram 400, a ray 414 extends from a focal point 406 through point 412. Ray 414 intersects with model 402 at a location 404. Thus, the target is the portion of model 402 at location 404. In an alternative embodiment, a ray may be extended from a focal point 406 through the center of viewport 410.

FIG. 5 illustrates adjusting the target location determined in FIG. 4, according to an optional feature. FIG. 5 shows a diagram 500. Diagram 500 shows a virtual camera at a location 506 and a building 502 in a three-dimensional model. A ray extends from location 506 to building 502 to determine an intersection 510. However, the target location of the camera may not be building 502 itself. The target location may be a location offset from building 502 that provides a view of building 502. So, the target is set to a location 508. The virtual camera swoops from location 506 along a trajectory 504 to location 508. In this way, the virtual camera transitions from a vertical, aerial perspective to a horizontal, ground perspective of building 502.

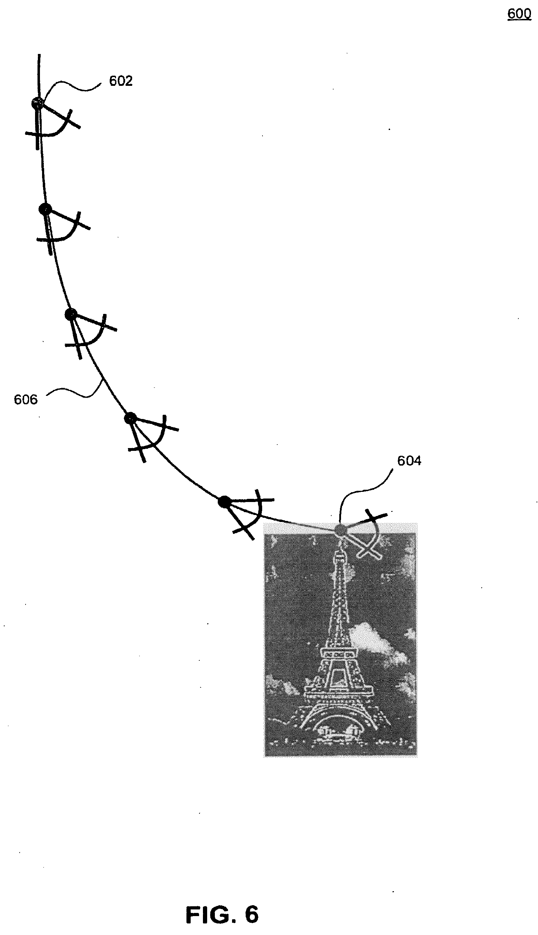

The starting position of the virtual camera need not be vertical. FIG. 6 shows a diagram 602 illustrating swoop navigation with an initial, non-zero tilt. Diagram 602 shows a virtual camera at a location 602 with an initial tilt. The virtual camera swoops along a trajectory 606 from location 602 to a target location 604.

As described above with respect to FIG. 3, once the target location determined, several calculations in step 306 are made to determine the next position of a virtual camera in a swoop trajectory. In particular, a new tilt of the virtual camera and a new, reduced distance between the virtual camera and the target are determined. FIGs. 7A-C and FIGs. 8A-B illustrate how the reduced distance and the tilt are determined. FIG. 7A is a flowchart illustrating a method 700 for determining the tilt and the reduced distance.

Method 700 begins by determining a reduced distance logarithmically at step 702. At high aerial distances there is not much data of interest to a user. However, as the camera gets closer to the ground, there is more data that is of interest to a user. A logarithmic function is useful because it moves the virtual camera through the high aerial portion of the swoop trajectory quickly. However, a logarithmic function moves the virtual camera more slowly as it approaches the ground. In one embodiment using logarithmic functions, the distance may be converted to a logarithmic level. The logarithmic level may be increased by a change parameter. Then, the logarithmic level is converted back into a distance using an exponential function. The sequence of equations may be as follows:

$$L = - \log_2 (C * 0.1) + 4.0,$$

$$L' = L + \Delta,$$

$$R = 10 * 2^{(4.0 - L')},$$

where $\Delta$ is the change parameter, L is the logarithmic level, C is the current distance, and R is the reduced distance.

Once the reduced distance is determined in step 702, a tilt is determined according to the distance. Method 700 illustrates two alternative steps for determining the tilt. At step 710, the tilt is determined by applying an absolute tilt function. At step 720, the tilt is determined by applying an incremental tilt function.

FIG. 7B illustrates the absolute tilt function of step 710 in more detail. The absolute tilt function defines a tilt for each distance. This has the effect of creating a predefined swoop trajectory. At step 712, three distance values are converted to logarithmic levels. The three distance values converted to logarithmic levels are: (1) the reduced distance to the target calculated in step 702, (2) the distance to the target at the start of the swoop trajectory, and (3) a threshold distance ending the swoop trajectory as described for step 312 in FIG. 3. The equations used to convert the distances to logarithmic levels may be as follows:

$$L_S = - \log_2 (S * 0.1) + 4.0,$$

$$L_T = - \log_2 (T * 0.1) + 4.0,$$

$$L_R = - \log_2 (R * 0.1) + 4.0,$$

where S is the starting distance, T is the threshold distance, R is the reduced distance, $L_S$ is the starting logarithmic level, $L_T$ is the threshold logarithmic level, $L_R$ is the logarithmic level of the reduced distance.

At step 714, a tilt value is interpolated based on the logarithmic levels ($L_S$, $L_T$, $L_R$), a starting tilt value and an ending tilt value. A non-zero starting tilt value is described with respect to FIG. 6. The ending tilt value will generally be 90 degrees, which may be parallel to the ground. In examples, the interpolation function may be a linear, quadratic, exponential, logarithmic, or other function as is apparent to those of skill in the art. An example linear interpolation function is:

$$\alpha = \left( \frac{L_R - L_S}{L_T - L_S} \right) \bullet (\alpha_E - \alpha_S) + \alpha_S,$$

where $\alpha$ is the new tilt, $\alpha_E$ is the ending tilt value, $\alpha_S$ is the starting tilt value, and the other variables are defined as described above. When repeated in the context of method 300 in FIG. 3, the absolute tilt function results in a pre-defined swoop trajectory. However, as will described later in more detail, the swoop trajectory may need to be adjusted due to streaming terrain or a moving target. If the swoop trajectory needs to be adjusted, an incremental tilt function as in step 720 may be preferred.

FIG. 7C depicts the incremental tilt function in step 720 in greater detail. The incremental tilt function calculates a change in tilt and increments the current tilt according to the change. At step 722, the absolute tilt function, as described for FIG. 7B, is applied to the current distance. The absolute tilt function returns a first tilt value. At step 724, the absolute tilt function is applied again. In this step, the absolute tilt function is applied to the reduced distance calculated in step 702. As result, the absolute tilt function returns a second tilt value.

At step 726, the current tilt value is adjusted according to the first tilt value determined in step 722 and the second tilt value determined in step 724. The current tilt value is incremented by the difference between the second tilt and the first tilt to determine the new tilt value. The equation used may be:

$$\alpha = \alpha_C + \alpha_2 - \alpha_1,$$

where $\alpha_C$ is the current tilt, $\alpha_1$ is the first tilt calculated based on the current distance, $\alpha_2$ is the second tilt calculated based on the reduced distance, and $\alpha$ is the new tilt.

When repeated in the context of method 300 in FIG. 3, the incremental tilt function described in step 720 results in a swoop trajectory that can adapt to streaming terrain, a moving target or a collision. However, with a stationary target and without streaming terrain or a collision, the incremental tilt function may behave the same as the absolute tilt function.

Referring back to FIG. 7A, an azimuth value is determined at step 730. In one embodiment, the azimuth may be determined with an absolute function as described with respect to step 710. In another embodiment, the azimuth value may be determined with an incremental function as described with respect to step 720. As described above, the incremental function may be advantageous when there is streaming terrain, a collision, or when the target is in motion.

FIGs. 8A-B describe in greater detail how the tilt functions described in FIGs. 7A-C may impact a swoop trajectory. FIG. 8A shows a chart 800 illustrating how the tilt of the camera corresponds to a distance to the target. Chart 800 shows two alternative tilt functions--a function 802 and a function 804. Function 802 has a linear correspondence between the camera tilt and the distance to target. Function 802 would result in a bowed swoop trajectory as illustrated in FIG. 1.

The tilt functions described with respect to FIGs. 7A-C more closely resemble function 804. Function 804 is defined such that the tilt approaches 90 degrees more quickly as the virtual camera approaches the target location. As the camera tilts, the GIS client requests more data from the GIS server. By tilting more quickly as the camera gets close to the target, GIS client makes fewer data requests from the GIS server, thus saving computing resources. Moreover, having most of the tilt occur toward the end of the swoop trajectory may provide a more pleasing user experience. Function 804 may result in the swoop trajectory shown in FIG. 8B.

FIG. 8B shows a diagram 850 illustrating an example swoop trajectory using tilt and distance functions described with respect to FIGs. 7A-C. Diagram 850 shows how a virtual camera travels along a swoop trajectory from a start location 812 to a target location 814. The swoop trajectory is described with respect to a first portion 802 and a second portion 804. As described with respect to FIG. 7A, the distance between the virtual camera and the target location decreases logarithmically. As result, the virtual camera travels quickly through portion 802 of the swoop trajectory. This causes the user to travel through vast expanses of nearly empty space quickly. But, as the virtual camera approaches the target through portion 804, the virtual camera begins to slow down. Also at portion 804, the tilt approaches 90 degrees more quickly as the virtual camera approaches the target location.

As described above, concentrating the tilt toward the end of the swoop trajectory saves server computing resources. In one embodiment, the server may alter the swoop trajectory according during high-traffic periods. In that embodiment, the server may signal the client to further concentrate the tilt towards the end of the swoop trajectory.

In an embodiment described with respect to FIG. 4, a user may select a target location. In that embodiment, the curvature of the Earth may cause the virtual camera to roll relative to the Earth. Roll may be disorienting to a user. FIG. 9 shows diagrams 900 and 950 illustrating a method for reducing roll, which may be used in step 306 in FIG. 3.

Diagram 900 shows a virtual camera at a first location 906 and a second location 908. The virtual camera is swooping towards a target on the surface of a model of the Earth 902. Model 902 is substantially spherical and has a center origin 904. As the virtual camera moves from location 906 to location 908 the curvature of the Earth causes roll. To compensate for the roll, the camera is rotated.

Diagram 950 shows the virtual camera rotated to a location 952. Diagram 950 also shows a line segment 956 connecting origin 904 with a location 906 and a line segment 954 connecting origin 904 with location 952. To compensate for roll, the virtual camera is rotated by an angle 958 between line segment 954 and line segment 956. In an alternative embodiment, the virtual camera may be rotated approximately by angle 958.

Between the rotating of the virtual camera in FIG. 9 and the positioning of the virtual camera in FIGS. 7A-C, the target may change its screen space projection. In other words, a position of the target in display area 202 in FIG. 2 may vary. Varying the position of the target in display area 202 can be disorienting to a user. FIG. 10 shows diagrams 1000 and 1050 illustrating a method for restoring a screen space projection, which may be used in step 308 in FIG. 3.

Diagram 1000 shows a virtual camera with a focal point 1002 and a viewport 1004. Viewport 1004 corresponds to display area 202 in FIG. 2. The virtual camera is on a swoop trajectory to a target with a location 1008 on the surface of a model 1022 of the Earth. Model 1022 of the Earth has a center origin 1024. When the swoop trajectory began, the target was projected onto a position 1006 on viewport 1004. Due to rotating and repositioning that has occurred during the swoop trajectory, the target is now projected onto a position 1010 on viewport 1004. Changing the target's projection from position 1006 to 1010 can be disorienting to a user.

To mitigate any user disorientation, model 1022 is rotated to restore the target's screen space projection. Diagram 1000 shows a line segment 1014 connecting target location 1008 with focal point 1002. Diagram 1000 also shows a line segment 1016 connecting focal point 1002 with position 1006 on viewport 1004. In an embodiment, the Earth may be rotated around origin 1024 by approximately an angle 1012 between line segment 1014 and line segment 1016.

Once the Earth is rotated, the target's screen space projection is restored as illustrated in diagram 1050. The target is at a location 1052 that projects onto position 1006 on viewport 1004. Note that the target location is the same location on the model of the Earth after the rotation. However, the rotation of the model changed the target location relative to the virtual camera.

FIGs. 11A-B show methods for adjusting for streaming terrain, which may be used in step 310 in FIG. 3. As discussed with regard to FIG. 4, the target location is determined by finding an intersection of a ray with a model of the Earth. As the virtual camera swoops closer to the target, the GIS client receives more detailed information regarding terrain on the model of the Earth. Thus, as more terrain data is received, the intersection with the ray with the model may change. Hence, the target location may change due to streaming terrain data. Changing the target location due to streaming terrain data is illustrated in FIG. 11A.

FIG. 11A shows a diagram 1100. Diagram 1100 shows a target location 1104 on a model of the Earth 1108. Target location 1104 is determined by finding an intersection between a ray and model 1108, as described with respect to FIG. 4. Diagram 1100 also shows a virtual camera swooping in towards target location 1104. The virtual camera is at a location 1110 at a first point in time. The virtual camera is repositioned to a location 1112 at a second point in time. At a third point in time, the virtual camera is repositioned to a location 1114. At that point, data for terrain 1102 is streamed into the GIS client. The GIS client determines that target location 1104 is underneath terrain 1102. Thus, the target may be repositioned above terrain 1102.

The target may be repositioned in several ways. A new target location may be determined by re-calculating an intersection of the ray and the model as in FIG. 4. Alternatively, a new target location may be determined by increasing the elevation of the old target location to be above the terrain. Diagram 1110 shows a new target location 1106 determined by elevating target location 1104 by a distance 1116 to rise above terrain 1102.

Once the target is repositioned, the swoop trajectory may be altered. At locations 1110 and 1112, diagram 1100 shows the tilt of the virtual camera and the distance between the camera and the target is determined relative to target location 1104. When the virtual camera is at location 1114, the tilt of the virtual camera and the distance between the camera and the target is determined relative to target location 1106. The change in the tilt and distance values effect the calculations discussed with respect to FIGs. 7A-C that determine the swoop trajectory. For this reason, by changing the target location due to the streaming terrain, the swoop trajectory may be altered.

The swoop trajectory may be also altered due to a terrain collision. FIG. 11B shows a diagram 1150 illustrating an alteration to a swoop trajectory due to a terrain collision. Diagram 1150 shows a virtual camera's swoop trajectory along a path 1162 to a target location 1158. When the virtual camera reaches a location 1160 on path 1162, data for terrain 1152 streams into the GIS client. The client may determine that a remainder of the trajectory 1154 collides with terrain 1152. As result, the swoop trajectory may be recalculated to a trajectory 1156 to avoid colliding with terrain 1152. In this way, a GIS client may stream in new terrain dynamically during a swoop trajectory. An example GIS client is described in detail in FIG. 12.

FIG. 12 is an architecture diagram of an exemplary client 1200 of a GIS according to an embodiment of the invention. In an embodiment, client 1200 includes a user interaction module 1210, local memory 1230, cache node manager 1240, renderer module 1250, network interface 1260, network loader 1265, and display interface 1280. As shown in FIG. 12, user interaction module 1210 includes a graphical user interface (GUI) 1212 and motion model 1218. Local memory 1230 includes a view specification 1232 and quad node tree 1234. Cache node manager 1240 includes a retrieval list 1245.

In an embodiment, the components of client 1200 can be implemented, for example, as software running on a client machine. Client 1200 interacts with a GIS server (not shown) to bring images of the Earth and other geospatial information/data to client 1200 for viewing by a user. Together, the images of the Earth and other geospatial data form a three dimensional model in a three dimensional environment. In an embodiment, software objects are grouped according to functions that can run asynchronously (e.g., time independently) from one another.

In general, client 1200 operates as follows. User interaction module 1210 receives user input regarding a location that a user desires to view and, through motion model 1218, constructs view specification 1232. Renderer module 1250 uses view specification 1232 to decide what data is to be drawn and draws the data. Cache node manager 1240 runs in an asynchronous thread of control and builds a quad node tree 1234 by populating it with quad nodes retrieved from a remote server via a network.

In an embodiment of user interface module 1210, a user inputs location information using GUI 1212. This results, for example, in the generation of view specification 1232. View specification 1232 is placed in local memory 1230, where it is used by renderer module 1250.

Motion model 1218 uses location information received via GUI 1212 to adjust the position and/or orientation of a virtual camera. The camera is used, for example, for viewing a displayed three dimensional model of the Earth. A user sees a displayed three dimensional model on his or her computer monitor from the standpoint of the virtual camera. In an embodiment, motion model 1218 also determines view specification 1232 based on the position of the virtual camera, the orientation of the virtual camera, and the horizontal and vertical fields of view of the virtual camera.

View specification 1232 defines the virtual camera's viewable volume within a three dimensional space, known as a frustum, and the position and orientation of the frustum with respect, for example, to a three dimensional map. In an embodiment, the frustum is in the shape of a truncated pyramid. The frustum has minimum and maximum view distances that can change depending on the viewing circumstances. As a user's view of a three dimensional map is manipulated using GUI 1212, the orientation and position of the frustum changes with respect to the three dimensional map. Thus, as user input is received, view specification 1232 changes. View specification 1232 is placed in local memory 1230, where it is used by renderer module 1250.

In accordance with one embodiment of the present invention, view specification 1232 specifies three main parameter sets for the virtual camera: the camera tripod, the camera lens, and the camera focus capability. The camera tripod parameter set specifies the following: the virtual camera position: X, Y, Z (three coordinates); which way the virtual camera is oriented relative to a default orientation, such as heading angle (e.g., north?, south?, in-between?); pitch (e.g., level?, down?, up?, in-between?); and yaw/roll (e.g., level?, clockwise?, anti-clockwise?, in-between?). The lens parameter set specifies the following: horizontal field of view (e.g., telephoto?, normal human eye - about 55 degrees?, or wide-angle?); and vertical field of view (e.g., telephoto?, normal human eye - about 55 degrees?, or wide-angle?). The focus parameter set specifies the following: distance to the near-clip plane (e.g., how close to the "lens" can the virtual camera see, where objects closer are not drawn); and distance to the far-clip plane (e.g., how far from the lens can the virtual camera see, where objects further are not drawn).

In one example operation, and with the above camera parameters in mind, assume the user presses the left-arrow (or right-arrow) key. This would signal motion model 1218 that the view should move left (or right). Motion model 1218 implements such a ground level "pan the camera" type of control by adding (or subtracting) a small value (e.g., 1 degree per arrow key press) to the heading angle. Similarly, to move the virtual camera forward, the motion model 1218 would change the X, Y, Z coordinates of the virtual camera's position by first computing a unit-length vector along the view direction (HPR) and adding the X, Y, Z sub-components of this vector to the camera's position after scaling each sub-component by the desired speed of motion. In these and similar ways, motion model 1218 adjusts view specification 1232 by incrementally updating XYZ and HPR to define the "just after a move" new view position. In this way, motion model 1218 is responsible for navigating the virtual camera through the three dimensional environment.

Motion module 1218 also conducts processing for swoop navigation. For swoop navigation processing, motion module 1218 includes several sub modules--a tilt calculator module 1290, target module 1292, positioner module 1294, roll compensator module 1294, terrain adjuster module 1298, screen space module 1288, and controller module 1286. Controller module 1286 activates the sub-modules to control the swoop navigation. In an embodiment, the swoop navigation components may operate as described with respect to FIG. 3.

Target module 1292 determines a target. In an embodiment, target module 1292 may operate as described to FIGs. 4-5. Target module 1292 determines the target by first extending a ray from a focal point of the virtual camera through a point selected by a user. Then, target module 1292 determines an intersection between the ray and a three dimensional model as stored in quad node tree 1234. Finally, target module 1292 determines a target in the three dimensional model at the intersection.

Tilt calculator module 1290 updates swoop parameters. Tilt calculator module 1290 performs distance, azimuth, and tilt calculations when activated. Tilt calculator module 1290 may be activated, for example, by a function call. When called, tilt calculator module 1290 first determines a distance between the virtual camera and the target in the three dimensional environment. Then, tilt calculator module 1290 determines a reduced distance. Tilt calculator module 1290 may reduce the distance logarithmically as described with respect to FIG. 7A. Finally, tilt calculator module 1290 determines a tilt as a function of the reduced distance. The tilt calculator may determine the tilt using an absolute tilt function (as described for FIG. 7B) or an incremental tilt function (as described for FIG. 7C).

Tilt calculator module 1290 calculates tilt such that the tilt approaches 90 degrees more quickly as the virtual camera approaches the target. As the camera tilts, renderer module 1250 needs more data that is likely not cached in quad node tree 1234 in local memory. As result, cache node manager 1240 has to request more data from the GIS server. By tilting more quickly as the virtual camera approaches the target, cache node manager 1240 makes fewer data requests from the GIS server. Tilt calculator module 1290 may also calculate an azimuth as described above.

When activated, positioner module 1294 repositions the virtual camera according to the target location determined by target module 1292 and the tilt and the reduced distance determined by tilt calculator module 1290. Positioner module 1294 may be activated, for example, by a function call. Positioner module 1294 may reposition the virtual camera by translating the virtual camera into the target, angling the virtual camera to match the tilt, and translating the virtual camera away from the target by the reduced distance. In one example, positioner module 1294 may operate as described with respect to steps 306-310 in FIG. 3.

As positioner module 1294 repositions the virtual camera, the curvature of the Earth may cause the virtual camera to roll with respect to the model of the Earth. When activated, roll compensator module 1296 rotates the camera to reduce roll. Roll compensator module 1296 may be activated, for example, by a function call. Roll compensator module 1296 may rotate the camera as described with respect to FIG. 9.

As positioner module 1294 repositions the virtual camera and roll compensator module 1296 rotates the camera, the target may change its screen space projection. Changing the target's screen space projection may be disorienting to a user. When activated, screen space module 1288 rotates the model of the Earth to restore the target's screen space projection. Screen space module 1288 may rotate the Earth as described with respect to FIG. 10.

As positioner module 1294 moves the virtual camera closer to the model of the Earth, renderer module 1250 requires more detailed model data, including terrain data. A request for more detailed geographic data is sent from cache node manager 1240 to the GIS server. The GIS server streams the more detailed geographic data, including terrain data back to GIS client 1200. Cache node manager 1240 saves the more detailed geographic data in quad node tree 1234. Thus, effectively, the model of the Earth stored in quad node tree 1230 changes. When it determined the location of the target, target module 1292 used the previous model in quad node tree 1230. For this reason, terrain adjuster module 1298 may have to adjust the location of the target, as described with respect to FIG. 11A. Further, the swoop trajectory calculated by positioner module 1294 may collide with the terrain. So, terrain adjuster module 1298 may have to adjust the swoop trajectory as well, as described with respect to FIG. 11B. Terrain adjuster module 1298 may be activated, for example, by a function call.

Renderer module 1250 has cycles corresponding to the display device's video refresh rate (e.g., 60 cycles per second). In one particular embodiment, renderer module 1250 performs a cycle of (i) waking up, (ii) reading the view specification 1232 that has been placed by motion model 1218 in a data structure accessed by a renderer, (iii) traversing quad node tree 1234 in local memory 1230, and (iv) drawing drawable data contained in the quad nodes residing in quad node tree 1234. The drawable data may be associated with a bounding box (e.g., a volume that contains the data or other such identifier). If present, the bounding box is inspected to see if the drawable data is potentially visible within view specification 1232. Potentially visible data is drawn, while data known not to be visible is ignored. Thus, the renderer uses view specification 1232 to determine whether the drawable payload of a quad node resident in quad node tree 1234 is not to be drawn, as will now be more fully explained.

Initially, and in accordance with one embodiment of the present invention, there is no data within quad node tree 1234 to draw, and renderer module 1250 draws a star field by default (or other suitable default display imagery). Quad node tree 1234 is the data source for the drawing that renderer 1250 does except for this star field. Renderer module 1250 traverses quad node tree 1234 by attempting to access each quad node resident in quad node tree 1234. Each quad node is a data structure that has up to four references and an optional payload of data. If a quad node's payload is drawable data, renderer module 1250 will compare the bounding box of the payload (if any) against view specification 1232, drawing it so long as the drawable data is not wholly outside the frustum and is not considered inappropriate to draw based on other factors. These other factors may include, for example, distance from the camera, tilt, or other such considerations. If the payload is not wholly outside the frustum and is not considered inappropriate to draw, renderer module 1250 also attempts to access each of the up to four references in the quad node. If a reference is to another quad node in local memory (e.g., memory 1230 or other local memory), renderer module 1250 will attempt to access any drawable data in that other quad node and also potentially attempt to access any of the up to four references in that other quad node. The renderer module's attempts to access each of the up to four references of a quad node are detected by the quad node itself.

As previously explained, a quad node is a data structure that may have a payload of data and up to four references to other files, each of which in turn may be a quad node. The files referenced by a quad node are referred to herein as the children of that quad node, and the referencing quad node is referred to herein as the parent. In some cases, a file contains not only the referenced child, but descendants of that child as well. These aggregates are known as cache nodes and may include several quad nodes. Such aggregation takes place in the course of database construction. In some instances, the payload of data is empty. Each of the references to other files comprises, for instance, a filename and a corresponding address in local memory for that file, if any. Initially, the referenced files are all stored on one or more remote servers (e.g., on server(s) of the GIS), and there is no drawable data present on the user's computer.

Quad nodes and cache nodes have built-in accessor functions. As previously explained, the renderer module's attempts to access each of the up to four references of a quad node are detected by the quad node itself. Upon the renderer module's attempt to access a child quad node that has a filename but no corresponding address, the parent quad node places (e.g., by operation of its accessor function) that filename onto a cache node retrieval list 1245. The cache node retrieval list comprises a list of information identifying cache nodes to be downloaded from a GIS server. If a child of a quad node has a local address that is not null, the renderer module 1250 uses that address in local memory 1230 to access the child quad node.

Quad nodes are configured so that those with drawable payloads may include within their payload a bounding box or other location identifier. Renderer module 1250 performs a view frustum cull, which compares the bounding box/location identifier of the quad node payload (if present) with view specification 1232. If the bounding box is completely disjoint from view specification 1232 (e.g., none of the drawable data is within the frustum), the payload of drawable data will not be drawn, even though it was already retrieved from a GIS server and stored on the user's computer. Otherwise, the drawable data is drawn.

The view frustum cull determines whether or not the bounding box (if any) of the quad node payload is completely disjoint from view specification 1232 before renderer module 1250 traverses the children of that quad node. If the bounding box of the quad node is completely disjoint from view specification 1232, renderer module 1250 does not attempt to access the children of that quad node. A child quad node never extends beyond the bounding box of its parent quad node. Thus, once the view frustum cull determines that a parent quad node is completely disjoint from the view specification, it can be assumed that all progeny of that quad node are also completely disjoint from view specification 1232.

Quad node and cache node payloads may contain data of various types. For example, cache node payloads can contain satellite images, text labels, political boundaries, 3 dimensional vertices along with point, line or polygon connectivity for rendering roads, and other types of data. The amount of data in any quad node payload is limited to a maximum value. However, in some cases, the amount of data needed to describe an area at a particular resolution exceeds this maximum value. In those cases, such as processing vector data, some of the data is contained in the parent payload and the rest of the data at the same resolution is contained in the payloads of the children (and possibly even within the children's descendents). There also may be cases in which children may contain data of either higher resolution or the same resolution as their parent. For example, a parent node might have two children of the same resolution as that parent, and two additional children of different resolutions (e.g., higher) than that parent.

The cache node manager 1240 thread, and each of one or more network loader 1265 threads, operate asynchronously from renderer module 1250 and user interaction module 1210. Renderer module 1250 and user interaction module 1210 can also operate asynchronously from each other. In some embodiments, as many as eight network loader 1265 threads are independently executed, each operating asynchronously from renderer module 1250 and user interaction module 1210. The cache node manager 1240 thread builds quad node tree 1234 in local memory 1230 by populating it with quad nodes retrieved from GIS server(s). Quad node tree 1234 begins with a root node when the client system is launched or otherwise started. The root node contains a filename (but no corresponding address) and no data payload. As previously described, this root node uses a built-in accessor function to self-report to the cache node retrieval list 1245 after it has been traversed by renderer module 1250 for the first time.

In each network loader 1265 thread, a network loader traverses the cache node retrieval list 1245 (which in the embodiment shown in FIG. 12 is included in cache node manager 1240, but can also be located in other places, such as the local memory 1230 or other storage facility) and requests the next cache node from the GIS server(s) using the cache node's filename. The network loader only requests files that appear on the cache node retrieval list. Cache node manager 1240 allocates space in local memory 1230 (or other suitable storage facility) for the returned file, which is organized into one or more new quad nodes that are descendents of the parent quad node. Cache node manager 1240 can also decrypt or decompress the data file returned from the GIS server(s), if necessary (e.g., to complement any encryption or compression on the server-side). Cache node manager 1240 updates the parent quad node in quad node tree 1234 with the address corresponding to the local memory 1230 address for each newly constructed child quad node.

Separately and asynchronously in renderer module 1250, upon its next traversal of quad node tree 1234 and traversal of the updated parent quad node, renderer module 1250 finds the address in local memory corresponding to the child quad node and can access the child quad node. The renderer's traversal of the child quad node progresses according to the same steps that are followed for the parent quad node. This continues through quad node tree 1234 until a node is reached that is completely disjoint from view specification 1232 or is considered inappropriate to draw based on other factors as previously explained.

In this particular embodiment, note that there is no communication between the cache node manager thread and renderer module 1250 other than the renderer module's reading of the quad nodes written or otherwise provided by the cache node manager thread. Further note that, in this particular embodiment, cache nodes and thereby quad nodes continue to be downloaded until the children returned contain only payloads that are completely disjoint from view specification 1232 or are otherwise unsuitable for drawing, as previously explained. Network interface 1260 (e.g., a network interface card or transceiver) is configured to allow communications from the client to be sent over a network, and to allow communications from the remote server(s) to be received by the client. Likewise, display interface 1280 (e.g., a display interface card) is configured to allow data from a mapping module to be sent to a display associated with the user's computer, so that the user can view the data. Each of network interface 1260 and display interface 1280 can be implemented with conventional technology.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims.

## Claims

1.  A computer-implemented method for navigating a virtual camera in a three dimensional environment, the three dimensional environment comprising a three dimensional model of the Earth, wherein the virtual camera specifies a view of the three dimensional environment, comprising:

    A: determining (302) a target location relative to the three dimensional model of the Earth in the three dimensional environment, the virtual camera at a first position to capture a vertical view of the three-dimensional model of the Earth, wherein the three-dimensional model of the Earth is curved;

    B: determining a distance between a first location of the virtual camera and the target location in the three dimensional environment;

    C: determining a reduced distance relative to the distance determined in step (B);

    D: determining a tilt as a function of the reduced distance, wherein the function is defined such that the tilt approaches 90 degrees as the reduced distance approaches zero, the tilt specifying an angle relative to an upward vector from the target location;

    E: repositioning (304) the virtual camera at a second location, the repositioning being carried out according to the tilt, the reduced distance and the target location, wherein the repositioning comprises rotating the camera to reduce or eliminate roll caused by curvature of the three-dimensional model of the Earth, wherein the rotating of the camera comprises rotating the camera by an angle between a first line segment connecting the first location and a center of the model of the Earth and a second line segment connecting the second location and the center of the model of the Earth;

    F: rotating the three-dimensional model of the Earth in the three dimensional environment such that the target location projects onto the same point on a viewport of the virtual camera when the virtual camera is at the first location and at the second location, wherein the model of the Earth is rotated by an angle between the first line segment and the second line segment in the direction of the tilt; and

    G: repeating steps B - F until the distance between the virtual camera and the target location is below a threshold to transition the virtual camera from the first position to capture the vertical view of the three-dimensional model of the Earth to a second position to capture a horizontal view of the three-dimensional model of the Earth, the second position closer to the three-dimensional model of the Earth than the first position.

2.  The method of claim 1, wherein step A comprises:

    extending a ray from a focal point of the virtual camera through a point selected by a user;
    determining an intersection between the ray and the three dimensional model of the Earth in the three dimensional environment; and

determining the target location according to the position of the intersection.

3. The method of claim 1, further comprising:

H: repositioning the virtual camera such that the position of the virtual camera is above terrain in the three dimensional model of the Earth in the three dimensional environment,

and wherein step G comprises repeating steps B through F until the distance between the virtual camera and the target location is below a threshold.

4. A system for navigating a virtual camera in a three dimensional environment, the three dimensional environment comprising a three dimensional model of the Earth, the system, comprising:

a target means (1292) for determining a target location relative to the three-dimensional model of the Earth in the three dimensional environment, the virtual camera at a first position to capture a vertical view of the three-dimensional model of the Earth, wherein the three-dimensional model of the Earth is curved;

a tilt calculator means (1290) for, when activated:

determining a distance between a first location of the virtual camera and the target location in the three dimensional environment,

determining a reduced distance relative to the distance between the first location of the virtual camera and the target camera and

determining a tilt as a function of the reduced distance, wherein the function is defined such that the tilt approaches 90 degrees as the reduced distance approaches zero, the tilt specifying an angle relative to an upward vector from the target location;

a positioner means (1294) for, when activated, repositioning the virtual camera at a second location, the repositioning being carried out according to the tilt, the reduced distance, and the target location,

a roll compensator means for rotating the camera to reduce or eliminate roll caused by curvature of the three-dimensional model of the Earth, the roll compensator means being configured to rotate the camera by an angle between a first line segment connecting the first location and a center of the model of the Earth and a second line segment connecting the second location and the center of the model of the Earth;

a screen space means for rotating the three dimensional model of the Earth in the three dimensional environment such that the target locations projects onto the same point in a viewport of the virtual camera when the virtual camera is at the first location and at the second location, the screen space means being configured to rotate the model of the Earth by an angle between the first line segment and the second line segment in the direction of the tilt;

a controller means (1286) for repeatedly activating the tilt calculator means, the positioner means, the roll compensating means and the screen space means until the distance between the virtual camera and the target location is below a threshold, such that the virtual camera is transitioned from the first position to capture the vertical view of the three-dimensional model of the Earth to a second position to capture a horizontal view of the three-dimensional model of the Earth, the second position closer to the three-dimensional model of the Earth than the first position.

5. The system of claim 4, wherein the function used by the tilt calculator means to determine the tilt is defined such that the tilt approaches 90 degrees more quickly as the distance decreases.

6. The system of claim 5, wherein the positioner means translates the virtual camera toward the target, angles the virtual camera to match the tilt, and translates the virtual camera away from the target location by the reduced distance.

7. The system of claim 6, wherein the target means extends a ray from a focal point of the virtual camera through a point selected by a user, determines an intersection between the ray and the three dimensional model of the Earth in the three dimensional environment, and determines a target location according to the intersection.

8. The system of claim 10, further comprising a terrain adjuster means (1298) for, when activated, repositioning the virtual camera such that the position of the virtual camera is above terrain in the three dimensional model of the Earth in the three dimensional environment,

wherein the controller means repeatedly activates the terrain adjuster means until the distance between the virtual camera and the target is below a threshold.

9. A computer readable medium carrying computer readable code for controlling a computer to carry out the method of any one of claims 1 to 3.

**Patentansprüche**

1. Computerimplementiertes Verfahren zum Navigieren einer virtuellen Kamera in einer dreidimensionalen Umgebung, wobei die dreidimensionale Umgebung ein dreidimensionales Modell der Erde umfasst, wobei die virtuelle Kamera eine Ansicht der dreidimensionalen Umgebung spezifiziert, umfassend:

A: Bestimmen (302) einer Zielposition relativ zu dem dreidimensionalen Modell der Erde in der dreidimensionalen Umgebung, wobei sich die virtuelle Kamera an einer ersten Position befindet, um eine vertikale Ansicht des dreidimensionalen Modells der Erde zu erfassen, wobei das dreidimensionale Modell der Erde gekrümmt ist;
B: Bestimmen eines Abstandes zwischen einem ersten Ort der virtuellen Kamera und dem Zielort in der dreidimensionalen Umgebung,
C: Bestimmen eines reduzierten Abstandes relativ zu dem Abstand, der in Schritt (B) bestimmt wird;
D: Bestimmen einer Neigung als eine Funktion des reduzierten Abstandes, wobei die Funktion derart definiert ist, dass sich die Neigung 90 Grad annähert, während sich der reduzierte Abstand Null nähert, und wobei die Neigung einen Winkel relativ zu einem aufwärts stehenden Vektor von dem Zielort spezifiziert;
E: Repositionieren (304) der virtuellen Kamera an einem zweiten Ort, wobei das Repositionieren gemäß der Neigung, dem reduzierten Abstand und dem Zielort erfolgt, wobei das Repositionieren das Drehen der Kamera umfasst, um Rollen zu reduzieren oder zu eliminieren, das durch die Krümmung des dreidimensionalen Modells der Erde bewirkt wird, wobei das Drehen der Kamera das Drehen der Kamera um einen Winkel zwischen einem ersten Liniensegment, das den ersten Ort und eine Mitte des Modells der Erde verbindet, und einem zweiten Liniensegment, das den zweiten Ort und die Mitte des Modells der Erde verbindet, umfasst;
F: Drehen des dreidimensionalen Modells der Erde in der dreidimensionalen Umgebung, sodass der Zielort auf den gleichen Punkt auf einem Sichtfenster der virtuellen Kamera projiziert wird, wenn sich die virtuelle Kamera an dem ersten Ort und an dem zweiten Ort befindet, wobei das Modell der Erde durch einen Winkel zwischen dem ersten Liniensegment und dem zweiten Liniensegment in Richtung auf die Neigung gedreht wird; und
G: Wiederholen der Schritte B bis F, bis der Abstand zwischen der virtuellen Kamera und dem Zielort sich unter einem Schwellenwert befindet, um die virtuelle Kamera von der ersten Position, um die vertikale Ansicht des dreidimensionalen Modells der Erde zu erfassen, zu einer zweiten Position, um eine horizontale Ansicht des dreidimensionalen Modells der Erde zu erfassen, übergehen zu lassen, wobei sich die zweite Position näher an dem dreidimensionalen Modell der Erde befindet als die erste Position.

2. Verfahren nach Anspruch 1, wobei Schritt A umfasst:

Erstrecken eines Strahls von einem Fokuspunkt der virtuellen Kamera durch einen Punkt, der von einem Benutzer ausgewählt ist;
Bestimmen einer Schnittfläche zwischen dem Strahl und dem dreidimensionalen Modell der Erde in der dreidimensionalen Umgebung; und
Bestimmen des Zielorts gemäß der Position der Schnittfläche.

3. Verfahren nach Anspruch 1, weiter umfassend:

H: Repositionieren der virtuellen Kamera, sodass die Position der virtuellen Kamera sich über Terrain in dem dreidimensionalen Modell der Erde in der dreidimensionalen Umgebung befindet,
und wobei Schritt G das Wiederholen der Schritte B bis F umfasst, bis sich der Abstand zwischen der virtuellen Kamera und dem Zielort unter einem Schwellenwert befindet.

4. System zum Navigieren einer virtuellen Kamera in einer dreidimensionalen Umgebung, wobei die dreidimensionale Umgebung ein dreidimensionales Modell der Erde umfasst und das System umfasst:

ein Zielmittel (1292) zum Bestimmen eines Zielorts relativ zu dem dreidimensionalen Modell der Erde in der dreidimensionalen Umgebung, wobei sich die virtuelle Kamera an einer ersten Position befindet, um eine vertikale Ansicht des dreidimensionalen Modells der Erde zu erfassen, wobei das dreidimensionale Modell der Erde gekrümmt ist;
ein Neigungsrechnermittel (1290), das, wenn es aktiviert ist:

einen Abstand zwischen einem ersten Ort der virtuellen Kamera und dem Zielort in der dreidimensionalen Umgebung bestimmt,
einen reduzierten Abstand relativ zu dem Abstand zwischen dem ersten Ort der virtuellen Kamera und der Zielkamera bestimmt und
eine Neigung als eine Funktion des reduzierten Abstandes bestimmt, wobei die Funktion derart definiert ist, dass sich die Neigung 90 Grad nähert, während sich der reduzierte Abstand Null nähert, und wobei die Neigung einen Winkel relativ zu einem aufwärts stehenden Vektor von dem Zielort spezifiziert;

ein Positionierermittel (1294), das, wenn es aktiviert ist, die virtuelle Kamera an einem zweiten Ort repositioniert, wobei das Repositionieren gemäß der Neigung, dem reduzierten Abstand und dem Zielort erfolgt,
ein Rollenkompensatormittel zum Drehen der Kamera, um Rollen zu reduzieren oder zu eliminieren, das durch die Krümmung des dreidimensionalen Modells der Erde bewirkt wird, wobei das Rollenkompensatormittel konfiguriert ist, die Kamera um einen Winkel zwischen einem ersten Liniensegment, das den ersten Ort und eine Mitte des Modells der Erde verbindet, und einem zweiten Liniensegment, das den zweiten Ort und die Mitte des Modells der Erde verbindet, zu drehen;
ein Bildschirmbereichmittel zum Drehen des dreidimensionalen Modells der Erde in der dreidimensionalen Umgebung, sodass die Zielorte auf den gleichen Punkt in einem Sichtfenster der virtuellen Kamera projiziert werden, wenn sich die virtuelle Kamera an dem ersten Ort und an dem zweiten Ort befindet, wobei das Bildschirmbereichmittel konfiguriert ist, das Modell der Erde um einen Winkel zwischen dem ersten Liniensegment und dem zweiten Liniensegment in Richtung der Neigung zu drehen;
ein Steuerungsmittel (1286) zum wiederholten Aktivieren des Neigungsrechnermittels, des Positionierermittels, des Rollenkompensatormittels und des Bildschirmbereichmittels, bis sich der Abstand zwischen der virtuellen Kamera und dem Zielort unter einem Schwellenwert befindet, sodass bewirkt wird, dass die virtuelle Kamera von der ersten Position, um die vertikale Ansicht des dreidimensionalen Modells der Erde zu erfassen, zu einer zweiten Position, um eine horizontale Ansicht des dreidimensionalen Modells der Erde zu erfassen, übergeht, wobei sich die zweite Position näher an dem dreidimensionalen Modell der Erde befindet als die erste Position.

5. System nach Anspruch 4, wobei die Funktion, die von dem Neigungsrechnermittel verwendet wird, um die Neigung zu bestimmen, derart definiert ist, dass sich die Neigung 90 Grad schneller annähert, als sich der Abstand verringert.

6. System nach Anspruch 5, wobei das Positionierermittel die virtuelle Kamera zu dem Ziel umsetzt, die virtuelle Kamera abwinkelt, sodass sie mit der Neigung übereinstimmt und die virtuelle Kamera um den reduzierten Abstand von dem Zielort weg umsetzt.

7. System nach Anspruch 6, wobei das Zielmittel einen Strahl von einem Fokuspunkt der virtuellen Kamera durch einen von einem Benutzer ausgewählten Punkt erstreckt, eine Schnittfläche zwischen dem Strahl und dem dreidimensionalen Modell der Erde in der dreidimensionalen Umgebung bestimmt und einen Zielort gemäß der Schnittfläche bestimmt.

8. System nach Anspruch 10, weiter umfassend ein Terraineinstellermittel (1298), das, wenn es aktiviert ist, die virtuelle Kamera repositioniert, sodass die Position der virtuellen Kamera sich über Terrain in dem dreidimensionalen Modell der Erde in der dreidimensionalen Umgebung befindet,
wobei das Steuerungsmittel wiederholt das Terraineinstellermittel aktiviert, bis sich der Abstand zwischen der virtuellen Kamera und dem Ziel unter einem Schwellenwert befindet.

9. Computerlesbares Medium, das computerlesbaren Code zum Steuern eines Computers aufnimmt, um das Verfahren nach irgendeinem der Ansprüche 1 bis 3 auszuführen.


**Revendications**

1. Procédé exécuté par ordinateur pour la navigation d'une caméra virtuelle dans un environnement tridimensionnel, l'environnement tridimensionnel comprenant un modèle tridimensionnel de la Terre, dans lequel la caméra virtuelle précise une vue de l'environnement tridimensionnel, comprenant :

A : la détermination (302) d'un emplacement cible par rapport au modèle tridimensionnel de la Terre dans l'environnement tridimensionnel, la caméra virtuelle se trouvant dans une première position pour capturer une vue verticale du modèle tridimensionnel de la Terre, dans lequel le modèle tridimensionnel de la Terre est courbe ;

B : la détermination d'une distance entre un premier emplacement de la caméra virtuelle et l'emplacement cible dans l'environnement tridimensionnel,

C : la détermination d'une distance réduite par rapport à la distance déterminée dans l'étape (B) ;

D : la détermination d'une inclinaison comme une fonction de la distance réduite, dans laquelle la fonction est définie de façon à ce que l'inclinaison s'approche de 90 degrés lorsque la distance réduite s'approche de zéro, l'inclinaison définissant un angle par rapport à un vecteur ascendant depuis l'emplacement cible ;

E : le repositionnement (304) de la caméra virtuelle à un deuxième emplacement, le repositionnement étant réalisé en fonction de l'inclination, de la distance réduite et de l'emplacement cible, dans lequel le repositionnement comprend la rotation de la caméra pour réduire ou éliminer le roulement causé par la courbure du modèle tridimensionnel de la Terre, dans lequel la rotation de la caméra comprend la rotation de la caméra d'un angle entre un premier segment de droite unissant le premier emplacement et un centre du modèle de la Terre et un deuxième segment de droite unissant le deuxième emplacement et le centre du modèle de la Terre ;

F : la rotation du modèle tridimensionnel de la Terre dans l'environnement tridimensionnel de façon à ce que l'emplacement cible se projette sur le même point dans une fenêtre d'affichage de la caméra virtuelle lorsque la caméra virtuelle se trouve sur le premier emplacement et le deuxième emplacement, dans lequel le modèle de la Terre est soumis à une rotation d'un angle compris entre le premier segment de droite et le deuxième segment de droite dans la direction de l'inclinaison ; et

G : la répétition des étapes B à F jusqu'à ce que la distance entre la caméra virtuelle et l'emplacement cible se trouve en dessous d'un seuil pour transférer la caméra virtuelle de la première position pour capturer la vue verticale du modèle tridimensionnel de la Terre vers une deuxième position pour capturer une vue horizontale du modèle tridimensionnel de la Terre, la deuxième position étant plus proche du modèle tridimensionnel de la Terre que la première position.

**2.** Procédé selon la revendication 1, dans lequel l'étape A comprend :

l'extension d'un rayon depuis un point focal de la caméra virtuelle à travers un point sélectionné par un utilisateur ;
la détermination d'une intersection entre le rayon et le modèle tridimensionnel de la Terre dans l'environnement tridimensionnel ; et
la détermination de l'emplacement cible en fonction de la position de l'intersection.

**3.** Procédé selon la revendication 1, comprenant en outre :

H : le repositionnement de la caméra virtuelle de façon à ce que la position de la caméra virtuelle se trouve au-dessus du terrain dans le modèle tridimensionnel de la Terre dans l'environnement tridimensionnel ;
et dans lequel l'étape G comprend la répétition des étapes B à F jusqu'à ce que la distance entre la caméra virtuelle et l'emplacement cible se trouve en dessous d'un seuil.

**4.** Système de navigation d'une caméra virtuelle dans un environnement tridimensionnel, l'environnement tridimensionnel comprenant un modèle tridimensionnel de la Terre, le système comprenant :

un moyen de ciblage (1292) pour la détermination d'un emplacement cible par rapport au modèle tridimensionnel de la Terre dans l'environnement tridimensionnel, la caméra virtuelle se trouvant dans une première position pour capturer une vue verticale du modèle tridimensionnel de la Terre, dans lequel le modèle tridimensionnel de la Terre est courbe ;
un moyen de calcul de l'inclinaison (1290) pour, lorsqu'il est activé :

déterminer une distance entre un premier emplacement de la caméra virtuelle et l'emplacement cible dans l'environnement tridimensionnel,
déterminer une distance réduite par rapport à la distance entre le premier emplacement de la caméra virtuelle et la caméra cible et
déterminer une inclinaison en tant que fonction de la distance réduite, où la fonction est définie de façon à ce que l'inclinaison s'approche de 90 degrés lorsque la distance réduite s'approche de zéro, l'inclinaison définissant un angle par rapport à un vecteur ascendant depuis l'emplacement cible ;
un moyen de positionnement (1294) pour, lorsqu'il est activé, repositionner la caméra virtuelle à un deuxième emplacement, le repositionnement étant réalisé en fonction de l'inclinaison, de la distance réduite et de l'emplacement cible,

un moyen de compensation du roulement pour la rotation de la caméra afin de réduire ou d'éliminer le roulement causé par la courbure du modèle tridimensionnel de la Terre, le moyen de compensation du roulement étant configuré pour mettre en rotation la caméra d'un angle entre un premier segment de droite unissant le premier emplacement et un centre du modèle de la Terre et un deuxième segment de droite unissant le deuxième emplacement et le centre du modèle de la Terre ;

un moyen pour l'espacement de l'écran pour la rotation du modèle tridimensionnel de la Terre dans l'environnement tridimensionnel de façon à ce que les emplacements cibles se projettent sur le même point dans une fenêtre d'affichage de la caméra virtuelle lorsque la caméra virtuelle se trouve au premier emplacement et au deuxième emplacement, le moyen pour l'espacement de l'écran étant configuré pour la rotation du modèle de la Terre d'un angle entre le premier segment de droite et le deuxième segment de droite dans le sens de l'inclinaison ;

un moyen de contrôle (1286) pour activer de manière répétée le moyen de calcul de l'inclinaison, le moyen de positionnement, le moyen de compensation du roulement et le moyen d'espacement de l'écran jusqu'à ce que la distance entre la caméra virtuelle et l'emplacement cible se trouve en dessous d'un seuil, de sorte que la caméra virtuelle est transférée de la première position pour capturer la vue verticale du modèle tridimensionnel de la Terre vers une deuxième position pour capturer une vue horizontale du modèle tridimensionnel de la Terre, la deuxième position étant plus proche du modèle tridimensionnel de la Terre que la première position.

5. Système selon la revendication 4, dans lequel la fonction utilisée par le moyen de calcul de l'inclinaison pour déterminer l'inclinaison est définie de façon à ce que l'inclinaison s'approche de 90 degrés plus rapidement lorsque la distance diminue.

6. Système selon la revendication 5, dans lequel le moyen de positionnement fait une translation de la caméra virtuelle vers la cible, oriente la caméra virtuelle de façon à égaler l'inclinaison et éloigne la caméra virtuelle par une translation égale à la distance réduite de l'emplacement cible.

7. Système selon la revendication 6, dans lequel le moyen de ciblage étend un rayon depuis un point focal de la caméra virtuelle à travers un point sélectionné par un utilisateur, détermine une intersection entre le rayon et le modèle tridimensionnel de la Terre dans l'environnement tridimensionnel, et détermine un emplacement cible en fonction de l'intersection.

8. Système selon la revendication 10, comprenant en outre un moyen d'ajustement du terrain (1298) pour, lorsqu'il est activé, repositionner la caméra virtuelle de façon à ce que la position de la caméra virtuelle se trouve au-dessus du terrain dans le modèle tridimensionnel de la Terre dans l'environnement tridimensionnel, dans lequel le moyen de contrôle active de manière répétée le moyen d'ajustement du terrain jusqu'à ce que la distance entre la caméra virtuelle et la cible soit inférieure à un seuil.

9. Support pouvant être lu par un ordinateur contenant un code pouvant être lu par un ordinateur pour contrôler un ordinateur afin d'exécuter le procédé selon l'une quelconque des revendications 1 à 3.

100

FIG. 1A

140

FIG. 1B

170

174

176

110

# FIG. 1C

180

182    186

188    110

184

# FIG. 1D

**FIG. 2**

<u>300</u>

Start

Determine a target ⟋ 302

Update a tilt, a distance to target, and an azimuth ⟋ 304

Compensate for the curvature of the Earth ⟋ 312

Restore display area projection ⟋ 314

Adjust for collision or streaming terrain ⟋ 316

⟋ 318

No ← Virtual camera close to target?

Yes

End

**FIG. 3A**

304

```
        ┌─────────┐
        │  Start  │
        └────┬────┘
             │
             ▼
   ┌──────────────────────┐
   │ Tilt a virtual camera with │ ⟜ 306
   │   respect to vertical      │
   └──────────┬───────────┘
             │
             ▼
   ┌──────────────────────┐
   │ Rotate the virtual camera about │ ⟜ 308
   │       the vertical              │
   └──────────┬───────────┘
             │
             ▼
   ┌──────────────────────┐
   │ Position the camera to be the │ ⟜ 310
   │ distance away from the target │
   └──────────┬───────────┘
             │
             ▼
        ┌─────────┐
        │   End   │
        └─────────┘
```

# FIG. 3B

400

402

404

414

412

410

406

408

**FIG. 4**

500

506

504

502

508

510

**FIG. 5**

600

FIG. 6

**FIG. 7A**

**FIG. 7B**

**FIG. 7C**

800

90

Tilt

802

804

0                                    Target

**FIG. 8A**

850

812

802

804

814

**FIG. 8B**

FIG. 9

FIG. 10

EP 2 279 497 B1

1100

1112    1110

1114

1106

1102

1116

1108

1104

## FIG. 11A

1150

1162

1160

1154

1156

1152

1158

## FIG. 11B

1200

User Interaction Module 1210

GUI                    1212

Motion Module 1218

Tilt Calculator Module
                       1290

Target Module    1292

Positioner
Module           1294

Roll Compensator
Module           1296

Terrain Adjuster
Module           1298

Screen Space
Module           1288

Controller
Module           1286

To Renderer Module 1250

Local Memory    1230

View
Specification    1232

Quad Node
Tree             1234

Cache Node
Manager          1240

Retrieval
List             1245

Network Loader
1265

Renderer Module
1250

Display Interface
1280

To Server Via Network

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0471484 A

**Non-patent literature cited in the description**

- **MACKINLAY, J.D. et al.** Rapid Controlled Movement Through a Virtual 3D Workspace. *Computer Graphics,* August 1990, vol. 24 (4